# EUROPÄISCHE PATENTANMELDUNG

(11) **EP 4 759 125 A1**
(43) Veröffentlichungstag der Anmeldung: **17.06.2026**
(21) Anmeldenummer: 25214717.8
(22) Anmeldetag: 10.11.2025
(51) Int. Cl.: A01D 78/10

(54) **WERBEMASCHINE**

(30) Priorität: 11.12.2024 DE 102024137254
(71) Anmelder: Maschinenfabrik Bernard Krone GmbH & Co. KG, 48480 Spelle (DE)
(72) Erfinder: Lütkeharmöller, Raphael, 49809 Lingen (DE)

(57) **Zusammenfassung**

Die Erfindung betrifft eine Werbemaschine (1), mit einem Hauptrahmen (2), einem mit dem Hauptrahmen (2) verbundenen Zwischenrahmen (4) sowie einem mit dem Zwischenrahmen (4) verbundenen Tragrahmen (5), wobei der Hauptrahmen (2) unabhängig vom Tragrahmen (5) gegenüber einem Untergrund (50) abstützbar ist, der Tragrahmen (5) in einer Arbeitsposition (AP) über ein Hilfsfahrwerk (6) am Untergrund (50) abstützbar ist und wenigstens ein Bearbeitungsorgan (7) beweglich am Tragrahmen (5) angeordnet ist, wobei der Zwischenrahmen (4) durch eine Zwischenrahmen-Aktoreinheit (12) gegenüber dem Hauptrahmen (2) verstellbar ist, wodurch ein in der Arbeitsposition (AP) gegebener Bodenabstand (A) des wenigstens einen Bearbeitungsorgans (7) auf einen Arbeitsabstand (A1) einstellbar ist, und wobei der Tragrahmen (5) durch eine Tragrahmen-Aktoreinheit (10) gegenüber dem Hauptrahmen (2) zwischen der Arbeitsposition (AP) und einer Hubposition (HP) verstellbar ist. Um bei einer Werbemaschine das Risiko eines Bodenkontakts der Bearbeitungsorgane zu minimieren, ist erfindungsgemäß vorgesehen, dass die Werbemaschine (1) eine Steueranordnung (20) aufweist, durch welche ein Betrieb der Zwischenrahmen-Aktoreinheit (12) mit einem Betrieb der Tragrahmen-Aktoreinheit (10) derart koordiniert ist, dass bei einem Senkvorgang der Tragrahmen (5) durch einen Senkbetrieb (SB) der Tragrahmen-Aktoreinheit (10) aus der Hubposition (HP) in die Arbeitsposition (AP) verstellt wird und nachfolgend der Bodenabstand (A) durch einen Senkbetrieb (SB) der Zwischenrahmen-Aktoreinheit (12) verringert wird.

## Beschreibung

Die vorliegende Erfindung betrifft eine Werbemaschine nach dem Oberbegriff von Anspruch 1.

Werbemaschinen oder Heuwerbemaschinen wie Zetter oder Schwader dienen in der Landwirtschaft dazu, geschnittenes Gras beziehungsweise Heu auf dem Feld zu wenden (beziehungsweise zu zetten) und/oder zu Schwaden zusammenzubringen. Das Erntegut wird durch Bearbeitungsorgane erfasst, die beweglich an einem Tragrahmen gelagert sind. Ein gängiger Typ von Werbemaschine verwendet als Bearbeitungsorgane einen oder mehrere rotierende Rechkreisel, bei denen jeweils eine Mehrzahl von Zinkenarmen um eine gemeinsame Achse rotiert. Jeder Zinkenarm trägt endseitig eine Mehrzahl von Zinken, die bodennah über das Feld geführt werden können und dabei das Halmgut erfassen. Das erfasste Halmgut wird über eine gewisse Wegstrecke von den Zinken mitgeführt, bevor es ab- beziehungsweise hochgeschleudert wird und an anderer Stelle wieder auf dem Feld landet.

Der Tragrahmen mit den Bearbeitungsorganen kann verstellbar an einem Hauptrahmen angeordnet sein. Durch Verstellen, zum Beispiel Hochschwenken, des Tragrahmens können die Bearbeitungsorgane zum Beispiel zum Durchfahren eines Vorgewendes so weit vom Boden abgehoben werden, dass sie normalerweise nicht in Kontakt mit der Vegetation oder anderen Objekten im Vorgewende geraten können. Soll die Bearbeitung wieder aufgenommen werden, wird der Tragrahmen wieder abgesenkt. Auch wenn der Tragrahmen in der Regel durch ein Hilfsfahrwerk abstützbar ist, kann es aufgrund der Dynamik des Absenkens dazu kommen, dass die Bearbeitungsorgane zeitweise aufsetzen oder in den Boden einstechen. Dieses Problem ergibt sich auch bei einer gängigen Bauform, bei welcher der Tragrahmen einen Mittelteil sowie beiderseits beweglich mit diesem verbundene Seitenteile aufweist. Bei Hochstellen des Tragrahmens werden zunächst die Seitenteile aktorisch hochgefahren, so dass das gesamte Gewicht zwischenzeitlich auf dem Mittelteil und dessen Hilfsfahrwerk ruht. Beim Absenken werden wiederum die Seitenteile erst abgesenkt, wenn der Mittelteil über sein Hilfsfahrwerk bereits Bodenkontakt hat. Das heißt es ergibt sich sowohl beim Anheben als auch beim Absenken eine zeitweise erhöhte Belastung des Mittelabschnitts, die ebenfalls zu einem Bodenkontakt der Bearbeitungsorgane führen kann.

Aufgabe der Erfindung ist es, bei einer Werbemaschine das Risiko eines Bodenkontakts der Bearbeitungsorgane zu minimieren.

Die Aufgabe wird gelöst mit einer Werbemaschine mit den Merkmalen des unabhängigen Patentanspruchs 1. Vorteilhafte Ausführungsformen sind den abhängigen Ansprüchen entnehmbar.

Dafür wird eine Werbemaschine geschaffen, mit einem Hauptrahmen, einem mit dem Hauptrahmen verbundenen Zwischenrahmen sowie einem mit dem Zwischenrahmen verbundenen Tragrahmen, wobei der Hauptrahmen unabhängig vom Tragrahmen gegenüber einem Untergrund abstützbar ist, der Tragrahmen in einer Arbeitsposition über ein Hilfsfahrwerk am Untergrund abstützbar ist und wenigstens ein Bearbeitungsorgan beweglich am Tragrahmen angeordnet ist, wobei der Zwischenrahmen durch eine Zwischenrahmen-Aktoreinheit gegenüber dem Hauptrahmen verstellbar ist, wodurch ein in der Arbeitsposition gegebener Bodenabstand des wenigstens einen Bearbeitungsorgans auf einen Arbeitsabstand einstellbar ist, und wobei der Tragrahmen durch eine Tragrahmen-Aktoreinheit gegenüber dem Hauptrahmen zwischen der Arbeitsposition und einer Hubposition verstellbar ist.

Die Werbemaschine ist dazu ausgebildet, am Boden liegendes Erntegut, insbesondere Halmgut wie Gras oder Heu, mittels wenigstens einem Bearbeitungsorgan zu bearbeiten. Dabei wird das Erntegut erfasst, bewegt und wieder abgelegt, wobei sich allgemein die Position eines bestimmten Stückes von Erntegut ändert. Hierbei kann das Erntegut gewendet und/oder verteilt werden. Es ist aber auch möglich, dass die Werbemaschine das Erntegut zu einem Schwad zusammenlegt. Die Werbemaschine kann auch als Heuwerbemaschine bezeichnet werden, wobei diese Bezeichnung nicht einschränkend auszulegen ist. Sie kann insbesondere als Wender, Zetter oder Schwader ausgebildet sein. Sie kann einen eigenen Fahrantrieb aufweisen. Bevorzugt ist sie allerdings als gezogene Werbemaschine ausgebildet. In diesem Fall weist sie keinen eigenen Fahrantrieb auf und ist dazu vorgesehen, von einem Schlepper gezogen zu werden. Man kann allerdings auch das Gespann aus Schlepper und gezogener Maschine insgesamt als "Werbemaschine" ansehen. Auch eine Ausgestaltung als Anbaugerät ist möglich, wobei die Werbemaschine beispielsweise an ein Dreipunkt-Hubwerk eines Schleppers ankoppelbar sein kann. Die Werbemaschine weist einen Hauptrahmen, einen Zwischenrahmen sowie einen Tragrahmen auf. Der Hauptrahmen verleiht der Werbemaschine wesentliche strukturelle Stabilität. Er kann insbesondere eine Kupplung aufweisen, die zur Ankopplung an den Schlepper vorgesehen ist. Alternativ kann er Ankopplungspunkte für ein Hubwerk des Schleppers aufweisen. Der Hauptrahmen ist unabhängig vom Tragrahmen gegenüber einem Untergrund abstützbar. Wenigstens ein Teil der Gewichtskraft des Hauptrahmens sowie optional weitere Komponenten, die mit dem Hauptrahmen verbunden sind, kann daher unabhängig vom Tragrahmen abgestützt werden. Im Fall einer Ausgestaltung als Anbaugerät kann der Hauptrahmen zum Beispiel am oben genannten Dreipunkt-Hubwerk eines Schleppers abgestützt werden, so dass er mittelbar über das Fahrwerk des Schleppers abgestützt ist. Jeder der oben genannten drei Rahmen, insbesondere der Tragrahmen und der Hauptrahmen, kann dazu vorgesehen sein, weitere Elemente der Werbemaschine zu tragen und abzustützen.

Der Zwischenrahmen ist mit dem Hauptrahmen und dem Tragrahmen verbunden. Somit sind der Hauptrahmen und der Tragrahmen über den Zwischenrahmen miteinander verbunden. Der Zwischenrahmen kann somit auch als Verbindungsrahmen oder zumindest in einigen Ausführungsformen als Schwinge bezeichnet werden. Während der Hauptrahmen und der Zwischenrahmen bevorzugt in sich starr ausgebildet sind, kann der Tragrahmen in einigen Ausführungsformen eine Mehrzahl gegeneinander beweglicher Rahmenteile aufweisen. Insbesondere kann er einen bezüglich einer Querachse der Werbemaschine mittig angeordneten Mittelteil aufweisen, der mit dem Zwischenrahmen verbunden ist, sowie zwei bezüglich der Querachse seitlich des Mittelteils angeordnete Seitenteile.

Der Tragrahmen ist in einer Arbeitsposition über ein Hilfsfahrwerk am Untergrund abstützbar. Die Arbeitsposition bezeichnet dabei insbesondere eine Position des Tragrahmens relativ zum Hauptrahmen. Wenngleich hier von "einer" Arbeitsposition die Rede ist, ist es möglich, dass der Tragrahmen eine Mehrzahl von Arbeitsposition einnehmen kann, wobei er in jeder dieser Arbeitspositionen über das Hilfsfahrwerk am Untergrund abstützt war ist. Das Hilfsfahrwerk ist mit dem Tragrahmen verbunden und dazu ausgebildet, dessen Gewichtskraft wenigstens anteilig abzustützen. Sofern der Tragrahmen wie oben geschildert eine Mehrzahl gegeneinander beweglicher Rahmenteile aufweist, kann mit jedem Rahmenteil wenigstens ein Element des Hilfsfahrwerks verbunden sein. Wenigstens ein Bearbeitungsorgan ist beweglich am Tragrahmen angeordnet. Das wenigstens eine Bearbeitungsorgan bildet denjenigen Teil der Werbemaschine, der aktiv mit dem Erntegut zusammenwirkt. Es kann insbesondere relativ zum Tragrahmen antreibbar sein. Jedes Bearbeitungsorgan kann als Rechkreisel ausgebildet sein, wobei bevorzugt eine Mehrzahl von Rechkreiseln vorgesehen sind. Ein derartiger Rechkreisel ist um eine aufwärts, aber nicht notwendigerweise senkrecht, verlaufende Rotationsachse oder Kreiselachse gegenüber dem Rahmen drehbar. Die Antriebskraft für die Drehung kann vom Schlepper übertragen werden, zum Beispiel über eine Zapfwelle. Der Rechkreisel weist üblicherweise eine Mehrzahl von Zinkenarmen auf, die nach außen von der Kreiselachse abragen. Jeder Zinkenarm trägt wiederum eine Mehrzahl von Zinken, mit denen das Halmgut erfasst wird. Das jeweilige Bearbeitungsorgan wird vom Tragerahmen getragen, so dass seine Gewichtskraft über den Tragrahmen aufgenommen wird und beispielsweise anteilig über das Hilfsfahrwerk an den Untergrund weitergeleitet werden kann.

Der Zwischenrahmen ist durch eine Zwischenrahmen-Aktoreinheit gegenüber dem Hauptrahmen verstellbar, wodurch ein in der Arbeitsposition gegebener Bodenabstand des wenigstens einen Bearbeitungsorgans auf einen Arbeitsabstand einstellbar ist. Die Zwischenrahmen-Aktoreinheit kann einen oder mehrere Aktoren aufweisen. Jeder der genannten Aktoren kann beispielsweise als pneumatischer, hydraulischer, elektrischer oder elektrohydraulischer Aktor ausgebildet sein. Insbesondere kann es sich um einen Linearaktor handeln. Die Zwischenrahmen-Aktoreinheit ist einerseits mit dem Zwischenrahmen sowie andererseits mit dem Hauptrahmen verbunden und dazu ausgebildet, eine Kraft und/oder ein Drehmoment zwischen beiden auszuüben. Durch die Wirkung der Zwischenrahmen-Aktoreinheit ist der Zwischenrahmen gegenüber dem Hauptrahmen verstellbar. Bevorzugt beinhaltet die Verstellbarkeit wenigstens anteilig eine Schwenkbarkeit, die optional durch eine translatorische Verstellbarkeit überlagert sein kann.

Durch das Verstellen des Zwischenrahmens verändert sich auch die Anordnung des Tragrahmens gegenüber dem Hauptrahmen und somit auch die des wenigstens einen Bearbeitungsorgans. Hierdurch wiederum ist ein Bodenabstand des Bearbeitungsorgans, welcher in der Arbeitsposition des Tragrahmens gegeben ist, einstellbar. Das heißt der Bodenabstand ist durch die Wirkung der Zwischenrahmen-Aktoreinheit veränderbar. Der Bodenabstand kann unterschiedlich definiert sein, insbesondere als der kleinste Abstand in vertikaler Richtung, der zwischen dem Bearbeitungsorgan und einem horizontal verlaufenden Untergrund gegeben ist. Es versteht sich, dass der im Betriebszustand gegebene reale Bodenabstand vom Bodenprofil abhängt und sich je nach Position der Werbemaschine zeitlich ändern kann. Die Verstellung des Hilfsrahmens kann eine vertikale Verlagerung des Bearbeitungsorgans in seiner Gesamtheit bewirken, zusätzlich oder alternativ kann allerdings auch eine rotatorische Verlagerung bewirkt werden. Insbesondere kann beispielsweise bei den oben genannten Rechkreiseln eine Neigung der Kreiselachse gegenüber der vertikalen verändert werden. Bei einer stärkeren Neigung ist ein jeweils unterster Teil des Rechkreisels näher am Untergrund angeordnet als bei einer schwächeren Neigung. Mittels der Hilfsrahmen-Aktoreinheit ist der Bodenabstand auf einen vorgesehenen Arbeitsabstand einstellbar. Der Arbeitsabstand ist der aktuell vorgesehene Wert des Bodenabstands. Dieser kann beispielsweise für eine Feldbearbeitung einmalig eingestellt werden, es wäre aber auch denkbar, dass der Arbeitsabstand im Laufe einer Feldbearbeitung verändert wird.

Des Weiteren ist der Tragrahmen durch eine Tragrahmen-Aktoreinheit gegenüber dem Hauptrahmen zwischen der Arbeitsposition und einer Hubposition verstellbar. In der Hubposition, die zumindest in einigen Ausführungsformen auch als Vorgewendeposition bezeichnet werden kann, ist das Hilfsfahrwerk vom Untergrund abgehoben. Dementsprechend sind wenigstens Teile des Tragrahmens im Vergleich zur Arbeitsposition vertikal aufwärts verlagert. Somit erfolgt auch eine Aufwärtsverlagerung des wenigstens einen Bearbeitungsorgans. Die Hubposition dient dazu, jeglichen Kontakt zwischen dem wenigstens ein Bearbeitungsorgan und dem Hilfsfahrwerk einerseits sowie dem Untergrund andererseits zu minimieren und idealerweise zu vermeiden. Die Tragrahmen-Aktoreinheit kann einen oder mehrere Aktoren aufweisen. Jeder der genannten Aktoren kann beispielsweise als pneumatischer, hydraulischer, elektrischer oder elektrohydraulischer Aktor ausgebildet sein, insbesondere als Linearaktor. Die Antriebsleistung der Zwischenrahmen-Aktoreinheit sowie die der Tragrahmen-Aktoreinheit können durch die Werbemaschine selbst erzeugbar sein; bevorzugt werden sie allerdings seitens des oben genannten Schleppers erzeugt und auf die Werbemaschine übertragen. Die Tragrahmen-Aktoreinheit ist einerseits mit dem Tragrahmen sowie andererseits mit dem Hauptrahmen verbunden und dazu ausgebildet, eine Kraft und/oder ein Drehmoment zwischen beiden auszuüben. Durch die Wirkung der Tragrahmen-Aktoreinheit ist der Tragrahmen gegenüber dem Hauptrahmen verstellbar. Bevorzugt beinhaltet die Verstellbarkeit wenigstens anteilig eine Schwenkbarkeit, die optional durch eine translatorische Verstellbarkeit überlagert sein kann. Wenngleich der Tragrahmen durch die Tragrahmen-Aktoreinheit gegenüber dem Hauptrahmen verstellbar ist, beinhaltet dies bevorzugt auch eine Verstellbarkeit gegenüber dem Hilfsrahmen.

Erfindungsgemäß weist die Werbemaschine eine Steueranordnung auf, durch welche ein Betrieb der Zwischenrahmen-Aktoreinheit mit einem Betrieb der Tragrahmen-Aktoreinheit derart koordiniert ist, dass bei einem Senkvorgang der Tragrahmen durch einen Senkbetrieb der Tragrahmen-Aktoreinheit aus der Hubposition in die Arbeitsposition verstellt wird und nachfolgend der Bodenabstand durch einen Senkbetrieb der Zwischenrahmen-Aktoreinheit verringert wird. Während zur Feldbearbeitung bevorzugt vorgesehen ist, dass die Zwischenrahmen-Aktoreinheit unabhängig von der Tragrahmen-Aktoreinheit ansteuerbar ist, sind im Zusammenhang mit dem Absenken des Tragrahmens der Betrieb der Zwischenrahmen-Aktoreinheit und derjenige der Tragrahmen-Aktoreinheit miteinander koordiniert und somit nicht unabhängig voneinander. Die Koordinierung erfolgt über die Steueranordnung. Die Steueranordnung koordiniert den Betrieb der beiden Aktoreinheiten so, dass bei einem Senkvorgang der Tragrahmen durch einen Senkbetrieb der Tragrahmen-Aktoreinheit aus der Hubposition in die Arbeitsposition verstellt wird und nachfolgend der Bodenabstand durch einen Senkbetrieb der Zwischenrahmen-Aktoreinheit verringert wird. Die Gesamtheit der Aktionen, die zur erneuten Aufnahme der Bodenbearbeitung nach dem zu vorigen Ausheben notwendig sind, wird in diesem Zusammenhang als "Senkvorgang" bezeichnet. Beim Senkvorgang erfolgt zum einen ein Senkbetrieb der Tragrahmen-Aktoreinheit sowie zum anderen ein Senkbetrieb der Zwischenrahmen-Aktoreinheit. Der Begriff "Senkbetrieb" bezeichnet jeweils eine Aktion der jeweiligen Aktoreinheit, die ein Absenken bewirkt. Je nach Ausbildung und Anordnung der Aktoreinheit kann dies unterschiedlichen Verstellvorgängen der Aktoreinheit entsprechen. So kann der Senkbetrieb im Falle eines Linearaktors entweder einer Kontraktion oder einer Expansion entsprechen, also der Linearaktor kann Zug oder Druck ausüben.

Der Senkbetrieb der Tragrahmen-Aktoreinheit bewirkt das Verstellen des Tragrahmens aus der Hubposition in die Arbeitsposition. Das heißt, durch den Senkbetrieb gelangt das Hilfsfahrwerk in Kontakt mit dem Untergrund. Nachdem der Senkbetrieb der Tragrahmen-Aktoreinheit abgeschlossen ist, wird durch einen Senkbetrieb der Zwischenrahmen-Aktoreinheit der Bodenabstand verringert. Dabei kann insbesondere vorgesehen sein, dass der Bodenabstand von einem Sicherheitsabstand auf den Arbeitsabstand verringert wird. Der Sicherheitsabstand ist ein Bodenabstand, der größer ist als der Arbeitsabstand. In einigen Ausführungsformen ist es möglich, dass der Senkbetrieb der Zwischenrahmen-Aktoreinheit bereits während des Senkbetriebs der Tragrahmen-Aktoreinheit beginnt. In jedem Fall erfolgt er aber wenigstens anteilig nach dem Senkbetrieb der Tragrahmen-Aktoreinheit. Somit ist der mittels der Zwischenrahmen-Aktoreinheit eingestellte Bodenabstand zu dem Zeitpunkt, in welchem das Hilfsfahrwerk auf dem Untergrund aufsetzt, größer als zu einem späteren Zeitpunkt, wenn der Senkbetrieb der Zwischenrahmen-Aktoreinheit abgeschlossen ist. Insbesondere kann vorgesehen sein, dass beim Aufsetzen des Hilfsfahrwerks der Sicherheitsabstand eingestellt ist und nachfolgend eine Reduzierung des Bodenabstands auf den Arbeitsabstand erfolgt.

Bei der erfindungsgemäßen Werbemaschine erfolgt das Absenken der Bearbeitungsorgane in zwei Schritten, die sich teilweise zeitlich überschneiden können. In einem ersten Schritt wird mittels der Tragrahmen-Aktoreinheit der Tragrahmen gegenüber dem Hauptrahmen verstellt, wodurch das Hilfsfahrwerk auf dem Untergrund aufsetzt. In einem zweiten Schritt wird mittels der Zwischenrahmen-Aktoreinheit der Bodenabstand des jeweiligen Bearbeitungsorgans verringert. Somit ist der Bodenabstand zum Zeitpunkt des Aufsetzen des Hilfsfahrwerks noch größer. Falls, aus welchem Grund auch immer, der Tragrahmen zwischenzeitlich weiter abgesenkt wird als vorgesehen, kann dennoch ein Aufsetzen oder Einstechen der Bearbeitungsorgane in den Untergrund vermieden werden, aufgrund des größeren eingestellten Bodenabstands. Nach der Übergangsphase im Zusammenhang mit dem Aufsetzen des Hilfsfahrwerks kann der Bodenabstand reduziert werden, insbesondere auf den vorgesehenen Arbeitsabstand. Vorteilhaft bei der erfindungsgemäßen Werbemaschine ist auch, dass die Zwischenrahmen-Aktoreinheit, die bei der Feldbearbeitung zur Einstellung des Bodenabstands genutzt wird, auch im Zusammenhang mit dem Senkvorgang genutzt wird. Die entsprechende Koordinierung mit der Tragrahmen-Aktoreinheit erfolgt über die Steueranordnung.

Wie bereits erwähnt, kann die Werbemaschine als Anbaugerät ausgebildet sein, wobei der Hauptrahmen an einer Landmaschine, beispielsweise einem Schlepper, abgestützt ist. Eine andere Ausgestaltungen sieht vor, dass der Hauptrahmen über ein Hauptfahrwerk am Untergrund abstützbar ist. Das heißt, die Werbemaschine weist ein Hauptfahrwerk auf, das dazu ausgebildet ist, den Hauptrahmen gegenüber dem Untergrund abzustützen. Beim normalen Betrieb der Werbemaschine steht das Hauptfahrwerk auf dem Untergrund auf. Wenigstens ein Teil der Gewichtskraft des Hauptrahmens sowie optional weiterer Komponenten, die mit dem Hauptrahmen verbunden sind, wird über das Hauptfahrwerk aufgenommen und gegen den Untergrund abgestützt. Das Hauptfahrwerk ist dabei bevorzugt direkt mit dem Hauptrahmen verbunden.

Die erfindungsgemäße Werbemaschine kann in jedem Fall das Risiko eines Bodenkontakts der Bearbeitungsorgane beim Senkvorgang minimieren. Ein derartiges Risiko kann allerdings auch beim Anheben oder Ausheben des Tragrahmens mit den Bearbeitungsorganen bestehen. Wie bereits erwähnt, kann der Tragrahmen einen Mittelabschnitt sowie beweglich mit diesem verbundene Seitenabschnitte aufweisen. Wenn vor dem Anheben des Tragrahmens zunächst die Seitenabschnitte gegenüber dem Mittelabschnitt angehoben werden, zum Beispiel durch Aufwärtsschwenken, wird der Mittelabschnitt vorübergehend stärker belastet. Hierdurch kann es ebenfalls zu einem Bodenkontakt der Bearbeitungsorgane kommen. Es ist daher bevorzugt, dass durch die Steueranordnung der Betrieb der Zwischenrahmen-Aktoreinheit mit dem Betrieb der Tragrahmen-Aktoreinheit derart koordiniert ist, dass bei einem Hubvorgang der Bodenabstand durch einen Hubbetrieb der Zwischenrahmen-Aktoreinheit vergrößert wird, bevor der Tragrahmen durch einen Hubbetrieb der Tragrahmen-Aktoreinheit aus der Arbeitsposition in die Hubposition verstellt wird. Die Gesamtheit der Aktionen, die zum Beenden der Bodenbearbeitung und zum Anheben notwendig sind, wird in diesem Zusammenhang als "Hubvorgang" bezeichnet. Beim Hubvorgang erfolgt zum einen ein Hubbetrieb der Tragrahmen-Aktoreinheit sowie zum anderen ein Hubbetrieb der Zwischenrahmen-Aktoreinheit. Der Begriff "Hubbetrieb" bezeichnet jeweils eine Aktion der jeweiligen Aktoreinheit, die ein Anheben bewirkt.

Der Hubbetrieb ist dabei jeweils die Umkehrung des Senkbetriebs. Er kann je nach Ausbildung und Anordnung der Aktoreinheit unterschiedlichen Verstellvorgängen der Aktoreinheit entsprechen. Der Hubbetrieb der Tragrahmen-Aktoreinheit bewirkt das Verstellen des Tragrahmens aus der Arbeitsposition in die Hubposition. D. h., durch den Hubbetrieb wird das Hilfsfahrwerk vom Untergrund abgehoben. Bevor der Hubbetrieb der Tragrahmen-Aktoreinheit erfolgt, wird durch den Hubbetrieb der Zwischenrahmen-Aktoreinheit der Bodenabstand vergrößert. Dabei kann insbesondere vorgesehen sein, dass der Bodenabstand vom Arbeitsabstand auf den oben genannten Sicherheitsabstand vergrößert wird. In einigen Ausführungsformen ist es möglich, dass der Hubbetrieb der Zwischenrahmen-Aktoreinheit anteilig noch während des Hubbetriebs der Tragrahmen-Aktoreinheit erfolgt. In jedem Fall erfolgt er aber wenigstens anteilig vor dem Hubbetrieb der Tragrahmen-Aktoreinheit. Somit ist der mittels der Zwischenrahmen-Aktoreinheit eingestellte Bodenabstand zu dem Zeitpunkt, in welchem das Hilfsfahrwerk den Untergrund verlässt, größer als zuvor während der Feldbearbeitung. Somit kann auch bei einem zwischenzeitlichen Absinken des Tragrahmens, zum Beispiel aufgrund einer stärkeren Belastung des Mittelabschnitts, ein Bodenkontakt der Bearbeitungsorgane verhindert werden. Solange der Tragrahmen in der Hubposition ist, kann die Zwischenrahmen-Aktoreinheit in einer Einstellung gehalten werden, die dem Sicherheitsabstand entspricht. Diese Einstellung kann dann bis zum erneuten Erreichen der Arbeitsposition beibehalten werden.

Wie bereits erwähnt, sind hinsichtlich der Verstellbarkeit des Tragrahmens und des Zwischenrahmens unterschiedliche Möglichkeiten gegeben, wobei eine wenigstens anteilig rotatorische Verstellbarkeit bevorzugt ist. Eine Ausführungsform sieht vor, dass der Zwischenrahmen um einen Zwischenrahmen-Schwenkachse schwenkbar mit dem Hauptrahmen verbunden ist und der Tragrahmen um eine Tragrahmen-Schwenkachse schwenkbar mit dem Zwischenrahmen verbunden ist. Sowohl die Zwischenrahmen-Schwenkachse als auch die Tragrahmen-Schwenkachse verlaufen dabei bevorzugt parallel zur Querachse der Werbemaschine, also horizontal und senkrecht zur Fahrtrichtung.

Bevorzugt sind die Zwischenrahmen-Aktoreinheit und die Tragrahmen-Aktoreinheit hydraulisch betreibbar und die Steueranordnung ist zur hydraulischen Ansteuerung der Aktoreinheiten eingerichtet. D. h., die Zwischenrahmen-Aktoreinheit weist wenigstens einen Zwischenrahmen-Hydraulikaktor auf und die Tragrahmen-Aktoreinheit weist wenigstens einen Tragrahmen-Hydraulikaktor auf. Jeder der genannten Hydraulikaktoren kann insbesondere als Hydraulikzylinder ausgebildet sein, namentlich als doppeltwirkender Hydraulikzylinder. Die Steueranordnung ist zur hydraulischen Ansteuerung beider Aktoreinheiten eingerichtet. Entweder ist die Steueranordnung dazu eingerichtet, die Aktoreinheiten selbst anzusteuern, oder sie unterstützt eine hydraulische Ansteuerung, wobei sie beispielsweise mit einer externen Hydraulikversorgung verbindbar sein kann. Die externe Hydraulikversorgung kann durch den oben genannten Schlepper bereitgestellt werden. Um die hydraulische Ansteuerung zu gewährleisten, kann die Steueranordnung verschiedene Elemente wie Hydraulikleitungen, Hydraulikventil oder dergleichen aufweisen.

Vorteilhaft ist die Steueranordnung dazu eingerichtet, für wenigstens einen Verstellvorgang, der aus Hubvorgang und Senkvorgang ausgewählt ist, und einen zugehörigen Verstellbetrieb, der aus Hubbetrieb und Senkbetrieb ausgewählt ist, die Zwischenrahmen-Aktoreinheit und Tragrahmen-Aktoreinheit derart hydraulisch mit einem gemeinsamen Hydraulikkreis zu verbinden, dass der Verstellbetrieb einer bezüglich dieses Verstellvorgangs beginnenden Aktoreinheit bei einem niedrigeren Hydraulikdruck im Hydraulikkreis auslösbar ist als der Verstellbetrieb einer bezüglich dieses Verstellvorgangs nachfolgenden Aktoreinheit. Wie bereits oben erläutert wurde, wird beim Hubvorgang zunächst die Zwischenrahmen-Aktoreinheit aktiviert und danach die Tragrahmen-Aktoreinheit. Insofern ist bezogen auf den Hubvorgang die Zwischenrahmen-Aktoreinheit die beginnende Aktoreinheit und die Tragrahmen-Aktoreinheit die nachfolgende Aktoreinheit. Umgekehrt ist beim Senkvorgang die Tragrahmen-Aktoreinheit die beginnende Aktoreinheit und die Zwischenrahmen-Aktoreinheit ist die nachfolgende Aktoreinheit.

Bei dem jeweiligen Verstellvorgang, also Hubvorgang und/oder Senkvorgang, werden beide Aktoreinheiten durch die Steueranordnung mit einem gemeinsamen Hydraulikreis verbunden. Dies schließt die Möglichkeit ein, dass die Aktoreinheiten auch unabhängig von dem genannten Verstellvorgang mit dem gemeinsamen Hydraulikreis verbunden sind. In jedem Fall sind sie während des Verstellvorgangs so mit dem Hydraulikreis verbunden, dass der Verstellbetrieb der beginnenden Aktoreinheit bei einem niedrigeren Hydraulikdruck im Hydraulikkreis auslösbar ist als der Verstellbetrieb der nachfolgenden Aktoreinheit. Daher wird, wenn der Hydraulikdruck ansteigt, zunächst die beginnende Aktoreinheit aktiviert und dann erst die nachfolgende Aktoreinheit. Beim Hubvorgang wird also zunächst der Hubbetrieb der Zwischenrahmen-Aktoreinheit ausgelöst, während beim Senkvorgang zunächst der Senkbetrieb der Tragrahmen-Aktoreinheit ausgelöst wird. In jedem Fall ist es möglich, nur durch eine Veränderung des Hydraulikdrucks im gemeinsamen Hydraulikkreis die zeitlich aufeinanderfolgenden Verstellbetriebe der beiden Aktoreinheiten auszulösen. Je nach Ausführungsform kann dies durch eine spezielle Ausgestaltung der Steueranordnung erreicht werden und/oder durch eine spezielle Ausgestaltung der Aktoreinheiten. Vorteilhaft kann für den Hubbetrieb ein erster Hydraulikkreis oder Hub-Hydraulikkreis vorgesehen sein, während für den Senkbetrieb ein zweiter Hydraulikkreis oder Senk-Hydraulikkreis vorgesehen ist.

Eine Ausgestaltung sieht vor, dass bezüglich wenigstens eines Verstellvorgangs die beginnende Aktoreinheit einen niedrigeren für den Verstellbetrieb notwendigen Aktivierungsdruck aufweist als die nachfolgende Aktoreinheit, wobei bevorzugt beide Aktoreinheiten durchgehend hydraulisch mit dem gemeinsamen Hydraulikkreis verbunden sind. In dieser Ausführungsform sind also die beiden Aktoreinheiten insofern unterschiedlich ausgebildet, als die beginnende Aktoreinheit bei einem niedrigeren Aktivierungsdruck aktivierbar ist als die nachfolgende Aktoreinheit. Wenn also beide Aktoreinheiten mit dem gleichen Hydraulikdruck beaufschlagt werden und dieser kontinuierlich erhöht wird, wird zunächst der Verstellbetrieb der beginnenden Aktoreinheit ausgelöst und dann der Verstellbetrieb der nachfolgenden Aktoreinheit. Da die Koordinierung der Verstellbetriebe durch die Aktoreinheiten selbst gewährleistet ist, ist keine externe Steuerung durch aktive Elemente der Steueranordnung notwendig. Daher kann die Steueranordnung bevorzugt beide Aktoreinheiten durchgehend hydraulisch mit dem Hydraulikreis verbinden.

Entsprechend einer Ausgestaltung weist die Steueranordnung für wenigstens einen Verstellvorgang ein zwischen dem gemeinsamen Hydraulikkreis und der nachfolgenden Aktoreinheit zwischengeordnetes Folgeventil auf, welches dazu eingerichtet ist, bei Überschreiten eines Schwelldrucks die nachfolgende Aktoreinheit hydraulisch mit dem Hydraulikkreis zu verbinden. Ein derartiges Folgeventil hält die nachfolgende Aktoreinheit hydraulisch vom gemeinsamen Hydraulikkreis getrennt, solange der Hydraulikdruck unterhalb des Schwelldrucks liegt. Wird der Schwelldruck überschritten, verbindet das Folgeventil die nachfolgende Aktoreinheit mit dem Hydraulikkreis, so dass dieser beide Aktoreinheiten beaufschlagt.

Eine andere Ausgestaltung sieht vor, dass die Steueranordnung für wenigstens einen Verstellvorgang ein Schaltventil aufweist, das in Abhängigkeit von einer Position der beginnenden Aktoreinheit schaltbar ist, um die nachfolgende Aktoreinheit mit dem gemeinsamen Hydraulikkreis zu verbinden. Das Schaltventil hält in geschlossenem Zustand die nachfolgende Aktoreinheit vom gemeinsamen Hydraulikkreis hydraulisch getrennt. In geöffnetem Zustand verbindet es die nachfolgende Aktoreinheit mit dem Hydraulikkreis. Dabei hängt der Schaltzustand des Schaltventils von der Position der beginnenden Aktoreinheit ab. Das heißt, wenn die beginnende Aktoreinheit eine bestimmte Position erreicht, wird das Schaltventil umgeschaltet. Das Schaltventil weist ein Schaltelement auf oder ist mit einem Schaltelement verbunden, das in Abhängigkeit von der Position der beginnenden Aktoreinheit auslösbar ist. Dabei muss die beginnende Aktoreinheit nicht direkt mit dem Schaltelement zusammenwirken. Beispielsweise könnte das Schaltelement an einem der drei Rahmen angeordnet sein und mit einem der anderen zwei Rahmen zusammenwirken. Das Schaltelement könnte beispielsweise berührungslos auslösbar sein oder durch das Herstellen eines elektrischen Kontakts. Bevorzugt ist es allerdings mechanisch auslösbar. Somit beruht das Umschalten letztendlich auf einer Kraftübertragung von der beginnenden Aktoreinheit auf das Schaltventil.

In einer vorteilhaften Ausgestaltung weist die Zwischenrahmen-Aktoreinheit einen Zwischenrahmen-Hydraulikzylinder auf, mit einem Arbeitskolben, durch dessen Position der Bodenabstand definiert ist, sowie einem Begrenzungskolben, der einen Bewegungsspielraum des Arbeitskolbens begrenzt und durch dessen Position der Arbeitsabstand definiert ist. Sowohl der Arbeitskolben als auch der Begrenzungskolben sind innerhalb einer Zylinderkammer des Zwischenrahmen-Hydraulikzylinders beweglich. Die genannte Zylinderkammer ist in einem Zylinderkörper angeordnet. Der Arbeitskolben ist vorteilhaft mit einer Kolbenstange verbunden. Die Kolbenstange sowie der Zylinderkörper weisen jeweils Anbindungspunkte auf, von denen einer mit dem Hauptrahmen verbunden ist und der andere mit dem Zwischenrahmen. Dementsprechend kann durch eine Relativbewegung des Arbeitskolbens die Länge des Zwischenrahmen-Hydraulikzylinders verändert und somit der Bodenabstand variiert werden. Bezeichnet man diejenige Seite, auf welcher der Begrenzungskolben bezüglich des Arbeitskolbens angeordnet ist, als distale Seite und die gegenüberliegende Seite als proximale Seite, so kann die Kolbenstange distal aus dem Zylinderkörper austreten, wobei sie durch den Begrenzungskolben hindurchgeführt ist.

Der Zwischenrahmen-Hydraulikzylinder kann insgesamt drei Hydraulikanschlüsse aufweisen. Insbesondere können zwei Hydraulikanschlüsse am Zylinderkörper angeordnet sein, während der dritte Hydraulikanschluss an der Kolbenstange angeordnet ist. Hierbei kann ein Primäranschluss am proximalen Ende des Zylinderkörpers angeordnet sein, während ein Sekundäranschluss an der Kolbenstange angeordnet ist. Der Sekundäranschluss kann mit einem Kanal innerhalb der Kolbenstange verbunden sein, der wiederum mit einer Öffnung kommuniziert, die auf einer distalen Seite des Arbeitskolben angeordnet ist. Durch den Kanal und die genannte Öffnung kann Hydraulikflüssigkeit zwischen dem Sekundäranschluss und der Zylinderkammer ausgetauscht werden. Man kann denjenigen Teil der Zylinderkammer, der proximal des Begrenzungskolbens angeordnet ist, als erste Teilkammer bezeichnen, während der distal des Begrenzungskolbens angeordnete Teil als zweite Teilkammer bezeichnet werden kann. Ein Tertiäranschluss ist an einem distalen Ende des Zylinderkörpers angeordnet und kommuniziert mit der zweiten Teilkammer. Solange ein Flüssigkeitsaustausch über den Tertiäranschluss unterbunden wird, definiert die in der zweiten Teilkammer eingeschlossene Hydraulikflüssigkeit die Position des Begrenzungskolben. Der Arbeitskolben kann in diesem Zustand in der ersten Teilkammer verschoben werden. Hierzu wird entweder Hydraulikflüssigkeit über den Primäranschluss eingeführt, während Hydraulikflüssigkeit über den Sekundäranschluss abfließt, wodurch sich der Arbeitskolben distal bewegt. Oder es wird Hydraulikflüssigkeit über den Sekundäranschluss eingeführt, während Hydraulikflüssigkeit über den Primäranschluss abfließt, wodurch sich der Arbeitskolben proximal bewegt.

Der Bewegungsspielraum des Arbeitskolbens ist durch die Position des Begrenzungskolben definiert. Dieser definiert somit auch den Arbeitsabstand. Beim Senkbetrieb und Hubbetrieb der Zwischenrahmen-Aktoreinheit muss lediglich der Arbeitskolben bewegt werden, während der Begrenzungskolben stationär bleibt. Soll der Arbeitsabstand verändert werden, kann über den Primäranschluss Hydraulikflüssigkeit eingeführt werden, während Hydraulikflüssigkeit über den Tertiäranschluss abfließen kann, so dass sich der Begrenzungskolben distal bewegt, oder es kann über den Tertiäranschluss Hydraulikflüssigkeit eingeführt werden, während Hydraulikflüssigkeit über den Primäranschluss abfließen kann, so dass sich der Begrenzungskolben proximal bewegt. Der Primäranschluss kann mit einem ersten gemeinsamen Hydraulikzweig verbunden sein und der Sekundäranschluss mit einem zweiten gemeinsamen Hydraulikzweig. Der Tertiäranschluss kann mit einem dritten Hydraulikzweig verbunden sein. Außerdem kann ein vierter Hydraulikzweig in den ersten Hydraulikzweig einmünden. Somit kann durch Hydraulikaustausch über den dritten und vierten Hydraulikzweig der Begrenzungskolben verschoben werden.

Durch die Erfindung wird außerdem ein Verfahren zum Betreiben einer Werbemaschine zur Verfügung gestellt, wobei die Werbemaschine einen Hauptrahmen aufweist, einen mit dem Hauptrahmen verbundenen Zwischenrahmen sowie einen mit dem Zwischenrahmen verbundenen Tragrahmen, wobei der Hauptrahmen unabhängig vom Tragrahmen gegenüber einem Untergrund abgestützt wird, der Tragrahmen in einer Arbeitsposition über ein Hilfsfahrwerk am Untergrund abgestützt wird und wenigstens ein Bearbeitungsorgan beweglich am Tragrahmen angeordnet ist, wobei der Zwischenrahmen durch eine Zwischenrahmen-Aktoreinheit gegenüber dem Hauptrahmen verstellbar ist, wodurch ein in der Arbeitsposition gegebener Bodenabstand des wenigstens einen Bearbeitungsorgans auf einen Arbeitsabstand einstellbar ist, und wobei der Tragrahmen durch eine Tragrahmen-Aktoreinheit gegenüber dem Hauptrahmen zwischen der Arbeitsposition und einer Hubposition verstellbar ist.

Erfindungsgemäß weist die Werbemaschine eine Steueranordnung auf, welche einen Betrieb der Zwischenrahmen-Aktoreinheit mit einem Betrieb der Tragrahmen-Aktoreinheit derart koordiniert, dass bei einem Senkvorgang der Tragrahmen durch einen Senkbetrieb der Tragrahmen-Aktoreinheit aus der Hubposition in die Arbeitsposition verstellt wird und nachfolgend der Bodenabstand durch einen Senkbetrieb der Zwischenrahmen-Aktoreinheit verringert wird.

Die genannten Begriffe wurden bereits oben mit Bezug auf die erfindungsgemäße Werbemaschine erläutert und werden daher nicht nochmals erklärt. Bevorzugte Ausführungsformen des erfindungsgemäßen Verfahrens entsprechen denen der erfindungsgemäßen Werbemaschine.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine Seitenansicht einer erfindungsgemäßen Werbemaschine in einem ersten Zustand;
- Fig. 2A-2C: Rückansichten der Werbemaschine aus Fig.1 in unterschiedlichen Zuständen;
- Fig. 3: eine Seitenansicht der Werbemaschine aus Fig.1 in einem zweiten Zustand;
- Fig. 4: eine Seitenansicht der Werbemaschine aus Fig.1 in einem dritten Zustand;
- Fig. 5A,5B: Schnittdarstellungen eines Hydraulikzylinders der Werbemaschine aus Fig.1;
- Fig.6: eine Schaltskizze mit einer ersten Ausführungsform einer Steueranordnung;
- Fig.7: eine Schaltskizze mit einer zweiten Ausführungsform einer Steueranordnung; sowie
- Fig.8: eine Schaltskizze mit einer dritten Ausführungsform einer Steueranordnung.

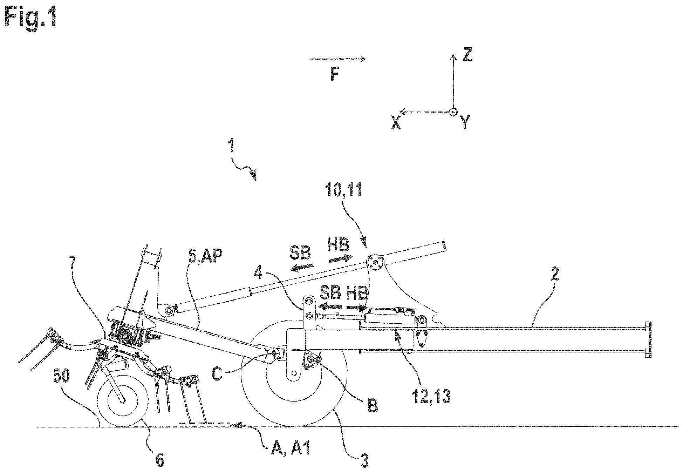

Fig. 1 zeigt eine Werbemaschine 1, in diesem Fall einen Kreiselzetter, gemäß der vorliegenden Erfindung. In den Figuren sind eine Längsachse X, eine Querachse Y, eine Hochachse Z sowie eine Fahrtrichtung F eingezeichnet. Die Werbemaschine 1 weist einen Hauptrahmen 2 auf, der über eine nicht dargestellte Deichsel an einem ebenfalls nicht dargestellten Schlepper angehängt werden kann. Der Hauptrahmen 2 ist über ein Hauptfahrwerk 3 gegenüber einem Untergrund 50 abgestützt. Ein Zwischenrahmen 4, welcher auch als Schwinge bezeichnet werden kann, ist um eine Zwischenrahmen-Schwenkachse B schwenkbar mit dem Hauptrahmen 2 verbunden. Ein Tragrahmen 5 ist wiederum um eine Tragrahmen-Schwenkachse C schwenkbar mit dem Zwischenrahmen 4 verbunden. Sowohl die Zwischenrahmen-Schwenkachse B als auch die Tragrahmen-Schwenkachse C verlaufen parallel zur Querachse Y.

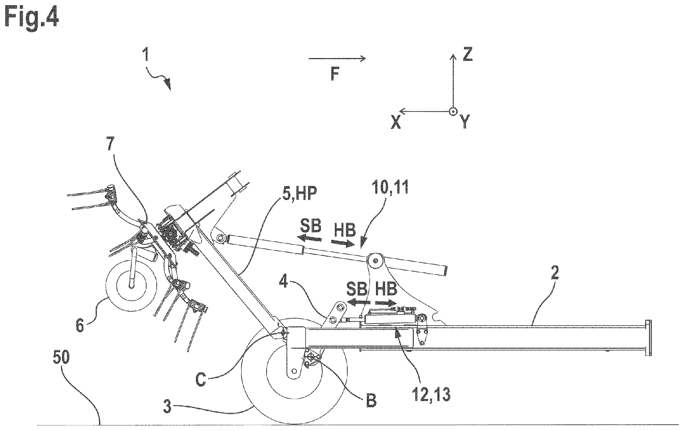

Der Tragrahmen 5 weist eine Hilfsfahrwerk 6 auf, über welches er am Untergrund 50 abstützbar ist. Außerdem sind am Tragrahmen 5 eine Mehrzahl von als Rechkreiseln ausgebildeten Bearbeitungsorganen 7 angeordnet. Jeder der Rechkreisel ist um eine Kreiselachse drehbar am Tragrahmen 5 gelagert und weist eine Mehrzahl von Zinkenarmen auf, von denen jeder wiederum eine Mehrzahl von Zinken trägt (in diesem Fall zwei Zinken). Fig. 1 zeigt den Tragrahmen 5 in einer Arbeitsposition AP, in welcher der Tragrahmen 5 mit dem Hilfsfahrwerk 6 auf dem Untergrund 50 aufsteht, während die Bearbeitungsorgane 7 am Boden befindliches Erntegut, zum Beispiel Halmgut wie Gras oder Heu, erfassen können. Dabei ist ein Bodenabstand A der Bearbeitungsorgane 7 auf einen vergleichsweise geringen Arbeitsabstand A1 eingestellt. Die Einstellung des Bodenabstands A erfolgt über eine Zwischenrahmen-Aktoreinheit 12 mit einem Zwischenrahmen-Hydraulikzylinder 13. Durch Einfahren des Zwischenrahmen-Hydraulikzylinders 13 ist ein Hubbetrieb HB der Zwischenrahmen-Aktoreinheit 12 möglich, während durch ein Ausfahren des Zwischenrahmen-Hydraulikzylinders 13 ein Senkbetrieb SB möglich ist. Zum Durchfahren eines Vorgewendes kann der Tragrahmen 5 in eine in Fig. 4 dargestellte Hubposition HP verstellt werden, in welcher das Hilfsfahrwerk 6 vom Untergrund 50 abgehoben ist. Dabei wird der Tragrahmen 5 um die Tragrahmen-Schwenkachse C verschwenkt, wozu eine Tragrahmen-Aktoreinheit 10 mit einem Tragrahmen-Hydraulikzylinder 11 vorgesehen ist. Durch einen Hubbetrieb HB der Tragrahmen-Aktoreinheit 10 kann der Tragrahmen 5 aufwärts geschwenkt werden, während er durch einen Senkbetrieb SB abwärts geschwenkt werden kann.

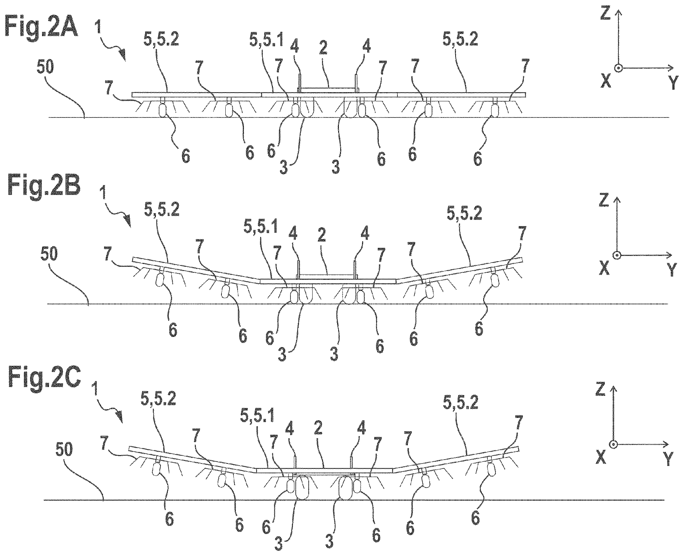

Fig. 2A bis 2C zeigen in stark schematisierter Rückansicht den prinzipiellen Ablauf des entsprechenden Hubvorgangs. Der Tragrahmen 5 weist in diesem Fall drei Teile 5.1, 5.2 auf. Ein Mittelteil 5.1 ist direkt über die oben genannte Tragrahmen-Schwenkachse C mit dem Zwischenrahmen 4 verbunden. Zwei bezüglich der Querachse Y seitlich mit dem Mittelteil 5.1 verbundene Seitenteile 5.2 sind um hier nicht eingezeichnete, parallel zur Längsachse X verlaufende Schwenkachsen gegenüber dem Mittelteil 5.1 schwenkbar. Fig. 2A zeigt einen Fig. 1 entsprechenden Zustand, in welchem sämtliche Räder des Hilfsfahrwerks 6 noch auf dem Untergrund 50 aufstehen. Daher sind die Seitenteile 5.2 über ihr eigenes Hilfsfahrwerk 6 abgestützt. Beim Hubvorgang werden entsprechend Fig. 2B durch hier nicht dargestellte Aktoren zunächst die Seitenteile 5.2 aufwärts geschwenkt, wodurch ihr Gewicht nahezu ausschließlich über den Mittelteil 5.1 und dessen Hilfsfahrwerk 6 abgestützt wird. Es ergibt sich somit eine zwischenzeitliche Mehrbelastung, durch welche es zu einem zwischenzeitlichen Absinken des Tragrahmens 5 kommen kann. Im weiteren Verlauf wird mittels der Tragrahmen-Aktoreinheit 10 der Tragrahmen 5 aufwärtsgeschwenkt und das Hilfsfahrwerk 6 in seiner Gesamtheit vom Untergrund 50 abgehoben, wie in Fig. 2C dargestellt ist. Bei einem Senkvorgang nach dem Durchfahren des Vorgewendes wird der in Fig. 2A bis 2C dargestellte Vorgang in umgekehrter Reihenfolge durchlaufen. D. h., zunächst setzt das Hilfsfahrwerk 6 des Mittelteils 5.1 auf dem Untergrund 50 auf, bevor auch das Hilfsfahrwerk 6 der Seitenteile 5.2 abgesetzt wird. Auch in diesem Fall ergibt sich eine Mehrbelastung des Mittelteils 5.1, was zu einem zwischenzeitlichen Absinken des Tragrahmens 5 führen könnte.

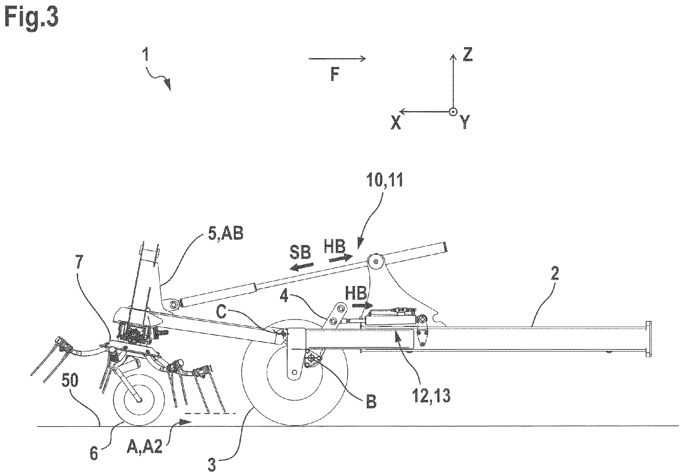

Um einen Bodenkontakt und ein mögliches Einstechen der Bearbeitungsorgane 7 in den Untergrund 50 zu verhindern, sind sowohl beim Hubvorgang als auch beim Senkvorgang ein Betrieb der Zwischenrahmen-Aktoreinheit 12 und ein Betrieb der Tragrahmen-Aktoreinheit 10 über eine Steueranordnung 20 koordiniert. Beim Hubvorgang wird zunächst durch einen Hubbetrieb HB der Zwischenrahmen-Aktoreinheit 12 der Bodenabstand A vom Arbeitsabstand A1 auf einen Sicherheitsabstand A2 vergrößert, wie in Fig. 3 dargestellt. Der Sicherheitsabstand A2 ist so groß, dass auch bei einem zwischenzeitlichen Einfedern des Hilfsfahrwerks 6 einen Bodenkontakt der Bearbeitungsorgane 7 weitgehend ausgeschlossen werden kann. Danach wird ein Hubbetrieb HB der Tragrahmen-Aktoreinheit 10 ausgelöst, wodurch der Tragrahmen 5 wie bereits beschrieben aufwärts geschwenkt wird in die in Fig. 4 dargestellte Hubposition HP. Bezogen auf den Hubvorgang ist die Zwischenrahmen-Aktoreinheit 12 die beginnende Aktoreinheit und die Tragrahmen-Aktoreinheit 10 die nachfolgende Aktoreinheit. Beim Senkvorgang ergibt sich ein umgekehrter Bewegungsablauf. Zunächst wird durch einen Senkbetrieb SB der Tragrahmen-Aktoreinheit 10 der Tragrahmen 5 abwärts geschwenkt, während der Bodenabstand A immer noch auf den Sicherheitsabstand A2 eingestellt ist. Somit wird beim Aufsetzen des Hilfsfahrwerks 6 wiederum einen Bodenkontakt der Bearbeitungsorgane 7 vermieden. Nachdem die Seitenteile 5.2 abgesetzt wurden, wird durch einen Senkbetrieb SB der Zwischenrahmen-Aktoreinheit 12 der Bodenabstand A auf den zuvor eingestellten Arbeitsabstand A1 reduziert.

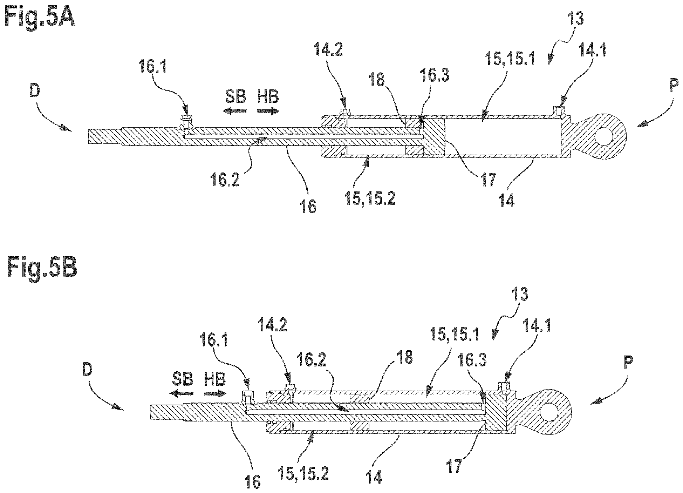

Aufbau und Funktion des Zwischenrahmen-Hydraulikzylinders 13 werden nun anhand der Figuren 5A und 5B erläutert. Der Zwischenrahmen-Hydraulikzylinder 13 weist einen Zylinderkörper 14 auf, innerhalb dessen eine Zylinderkammer 15 definiert ist. In der Zylinderkammer 15 ist zum einen ein Arbeitskolben 17 angeordnet, der mit einer Kolbenstange 16 verbunden ist. Die Kolbenstange 16 tritt auf einer distalen Seite D aus dem Zylinderkörper 14 aus. Des Weiteren ist in der Zylinderkammer 15 ein Begrenzungskolben 18 angeordnet, der einen Bewegungsspielraum des Arbeitskolbens 17 begrenzt und durch dessen Position der Arbeitsabstand A1 definiert ist. Die Kolbenstange 16 ist durch den Begrenzungskolben 18 hindurchgeführt. Auf einer proximalen Seite P des Begrenzungskolbens 18 ist eine erste Teilkammer 15.1 definiert, innerhalb welcher sich der Arbeitskolben 17 bewegen kann. Dabei zeigt Fig.5A eine äußerste distale Position des Arbeitskolbens 17, die dem Arbeitsabstand entspricht, während Fig.5B eine äußerste proximale Position zeigt, die dem Sicherheitsabstand entspricht. Auf der distalen Seite D des Begrenzungskolbens 18 ist eine zweite Teilkammer 15.2 gebildet, deren Größe durch das darin eingeschlossene Volumen an Hydraulikflüssigkeit definiert ist. Der Zwischenrahmen-Hydraulikzylinder 13 weist insgesamt drei Hydraulikanschlüsse auf. Ein Primäranschluss 14.1 ist am proximalen Ende des Zylinderkörpers 14 angeordnet, während ein Sekundäranschluss 16.1 an der Kolbenstange 16 angeordnet ist. Der Sekundäranschluss 16.1 ist über einen Kanal 16.2 innerhalb der Kolbenstange 16 mit einer Öffnung 16.3 verbunden, die distal benachbart zum Arbeitskolben 17 angeordnet ist.

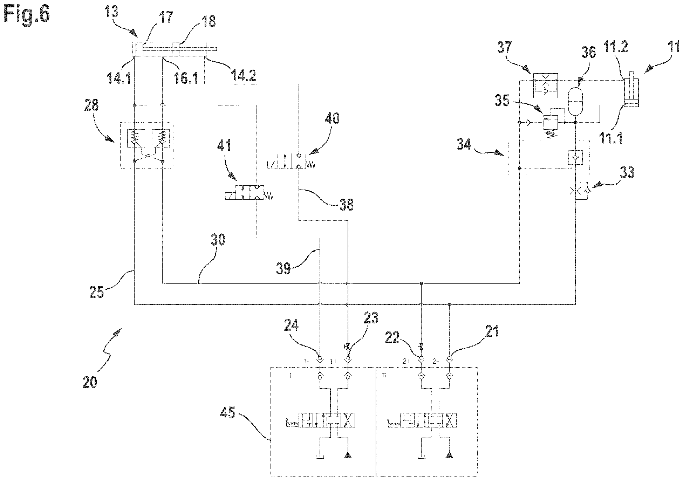

Fig.6 zeigt eine Schaltskizze mit einer ersten Ausführungsform der Steueranordnung 20. Diese weist einen ersten Hydraulikzweig 25 oder Senk-Hydraulikzweig auf sowie einen zweiten Hydraulikzweig 30 oder Hub-Hydraulikzweig. Der Primäranschluss 14.1 des Zwischenrahmen-Hydraulikzylinders 13 ist mit dem ersten Hydraulikzweig 25 verbunden, ebenso wie ein Primäranschluss 11.1 des Tragrahmen-Hydraulikzylinders 11. Der Sekundäranschluss 16.1 des Zwischenrahmen-Hydraulikzylinders 13 sowie ein Sekundäranschluss 11.2 des Tragrahmen-Hydraulikzylinders 11 sind mit dem zweiten Hydraulikzweig 30 verbunden. Der erste Hydraulikzweig 25 ist über einen ersten Hydraulikanschluss 21 der Werbemaschine 1 mit einer Hydraulikversorgung 45 des Schleppers verbunden, während der zweite Hydraulikzweig 30 über einen zweiten Hydraulikanschluss 22 mit der genannten Hydraulikversorgung 45 verbunden ist. Die beiden Hydraulikzweige 25, 30 weisen ein Paar von entsperrbaren Rückschlagventilen 28 auf, das einen Durchfluss in einem Hydraulikzweig 25, 30 nur dann ermöglicht, wenn gleichzeitig ein Durchfluss im anderen Hydraulikzweig gegeben ist. Dem Primäranschluss 11.1 des Tragrahmen-Hydraulikzylinders 11 ist zum einen ein erstes Drosselrückschlagventil 33 vorgeschaltet sowie zum anderen ein weiteres entsperrbares Rückschlagventil 34, das sich öffnet, wenn im zweiten Hydraulikzweig 30 ein Volumenstrom festgestellt wird. Der erste Hydraulikzweig 25 ist auf Seiten des Tragrahmen-Hydraulikzylinders 11 mit einem Druckspeicher 36 verbunden, welcher eine gewisse Nachgiebigkeit des Tragrahmen-Hydraulikzylinders 11 gegenüber äußeren Kräften ermöglicht. Hierdurch wirkt der Tragrahmen-Hydraulikzylinder 11 bei der Feldbearbeitung ähnlich wie eine Feder, die es dem Tragrahmen 5 ermöglicht, einem sich ändernden Bodenprofil zu folgen. Der erste und der zweite Hydraulikzweig 25, 30 sind außerdem durch ein Druckbegrenzungsventil 35 verbunden, welches bei Überdruck ein Abfließen von Hydraulikflüssigkeit in den zweiten Hydraulikzweig 30 ermöglicht. Der zweite Hydraulikzweig 30 weist ein zweites Drosselrückschlagventil 37 auf, das in seiner Funktion in dem ersten Drosselrückschlagventil 33 entspricht.

Die Steueranordnung 20 weist außerdem ein dritten Hydraulikzweig 38 mit einem ersten Schaltventil 40 sowie einen vierten Hydraulikzweig 39 mit einem zweiten Schaltventil 41 auf. Der dritte Hydraulikzweig 38 ist über einen dritten Hydraulikanschluss 23 mit der Hydraulikversorgung 45 des Schleppers verbunden, während der vierte Hydraulikzweig 39 mit einem vierten Hydraulikanschluss 24 verbunden ist. Der vierte Hydraulikzweig 39 mündet zwischen dem Sperrventil Paar 28 und dem Primäranschluss 14.1 in den ersten Hydraulikzweig 25 ein. In Fig. 6 sind beide Schaltventile 40, 41, die in nicht dargestellter Weise signalübertragend mit dem Schlepper verbunden sein können, geschlossen. Somit ist die Hydraulikflüssigkeit in der zweiten Teilkammer 15.2 eingeschlossen und die Position des Begrenzungskolbens 18 festgelegt. Durch Druckbeaufschlagung des ersten Hydraulikzweigs 25 kann der Arbeitskolben 17 distal verschoben werden, bis er am Begrenzungskolben 18 anliegt. Umgekehrt kann durch Druckbeaufschlagung des zweiten Hydraulikzweigs 30 der Arbeitskolben 17 proximal verschoben werden. Eine Druckbeaufschlagung des ersten Hydraulikzweigs 25 bedeutet gleichzeitig auch eine Druckerhöhung am Primäranschluss 11.1 des Tragrahmen-Hydraulikzylinders 11, während eine Druckbeaufschlagung des zweiten Hydraulikzweigs 30 einer Druckerhöhung am Sekundäranschluss 11.2 entspricht.

Dabei sind die beiden Hydraulikzylinder 11, 13 unterschiedlich ausgebildet, so dass ihr jeweiliger Hubbetrieb bei einem unterschiedlichen Aktivierungsdruck auslösbar ist. Gleiches gilt für ihren Senkbetrieb. Wird für einen Senkvorgang der Druck im ersten Hydraulikzweig 25 erhöht, so wird ein Aktivierungsdruck der diesbezüglich beginnenden Tragrahmen-Aktoreinheit 10 früher erreicht als ein Aktivierungsdruck der diesbezüglich nachfolgenden Zwischenrahmen-Aktoreinheit 12. Somit reagieren die beiden Aktoreinheiten 10, 12 aufgrund ihrer Ausgestaltung in der gewünschten zeitlich koordinierten Weise. Wird andererseits für einen Hubvorgang der Druck im zweiten Hydraulikkreis 30 erhöht, so wird ein Aktivierungsdruck der diesbezüglich beginnenden Zwischenrahmen-Aktoreinheit 12 früher erreicht als ein Aktivierungsdruck der diesbezüglich nachfolgenden Tragrahmen-Aktoreinheit 10.

Falls der Arbeitsabstand verändert werden soll, kann der Begrenzungskolben 18 durch Druckbeaufschlagung des dritten Hydraulikzweigs 38 oder des vierten Hydraulikzweigs 39 verschoben werden. Hierzu werden jeweils beide Schaltventile 40, 41 geöffnet.

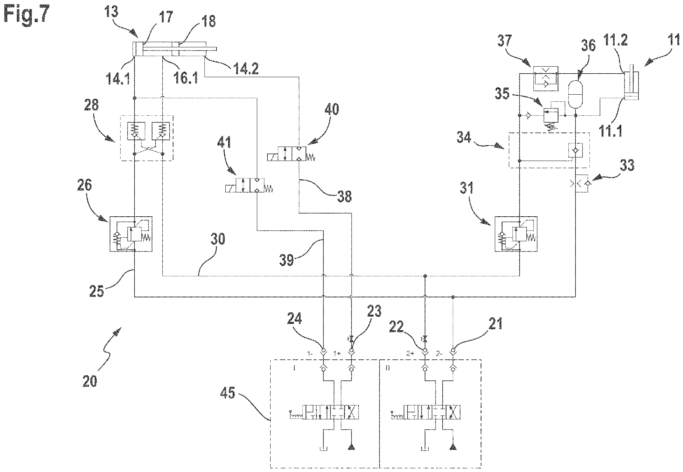

Fig. 7 zeigt eine zweite Ausführungsform einer Steueranordnung 20, die weitgehend mit der ersten Ausführungsform übereinstimmt und insoweit nicht nochmals erläutert wird. Allerdings ist in diesem Fall zwischen dem ersten Hydraulikanschluss 21 und dem Zwischenrahmen-Hydraulikzylinder 13 ein erstes Folgeventil 26 zwischengeordnet. Das erste Folgeventil 26 hält den Primäranschluss 14.1 hydraulisch vom ersten Hydraulikzweig 25 getrennt, solange ein Hydraulikdruck im ersten Hydraulikzweig 25 unter einem definierten Schwelldruck liegt. Daher wird bei einer Druckerhöhung zunächst nur der Senkbetrieb des Tragrahmen-Hydraulikzylinders 11 aktiviert, solange der Hydraulikdruck nicht den Schwelldruck erreicht hat. Steigt der Hydraulikdruck weiter an, öffnet das erste Folgeventil 26 und der Zwischenrahmen-Hydraulikzylinders 13 wird hydraulisch mit dem ersten Hydraulikzweig 25 verbunden. Hierdurch wird der Senkbetrieb der Zwischenrahmen-Aktoreinheit 12 ausgelöst. In entsprechender Weise ist zwischen dem zweiten Hydraulikanschluss 22 und dem Tragrahmen-Hydraulikzylinder 11 ein zweites Folgeventil 31 zwischengeordnet. Dieses verbindet den Sekundäranschluss 11.2 des Tragrahmen-Hydraulikzylinders 11 hydraulisch mit dem zweiten Hydraulikzweig 30, wenn ein Hydraulikdruck im zweiten Hydraulikzweig 30 ein Schwelldruck überschreitet. Der jeweilige Schwelldruck kann bei den beiden Folgeventilen 26, 31 identisch oder unterschiedlich sein. Wird der Hydraulikdruck im zweiten Hydraulikzweig 30 erhöht, hält das zweite Folgeventil 31 den Sekundäranschluss 11.2 zunächst hydraulisch vom zweiten Hydraulikzweig 30 getrennt. Daher wird bei einer Druckerhöhung zunächst nur der Hubbetrieb der Zwischenrahmen-Aktoreinheit 12 aktiviert. Steigt der Hydraulikdruck weiter an, öffnet das zweite Folgeventil 30 und der Tragrahmen-Hydraulikzylinder 11 wird hydraulisch mit dem zweiten Hydraulikzweig 30 verbunden. Hierdurch wird der Hubbetrieb der Tragrahmen-Aktoreinheit 10 ausgelöst.

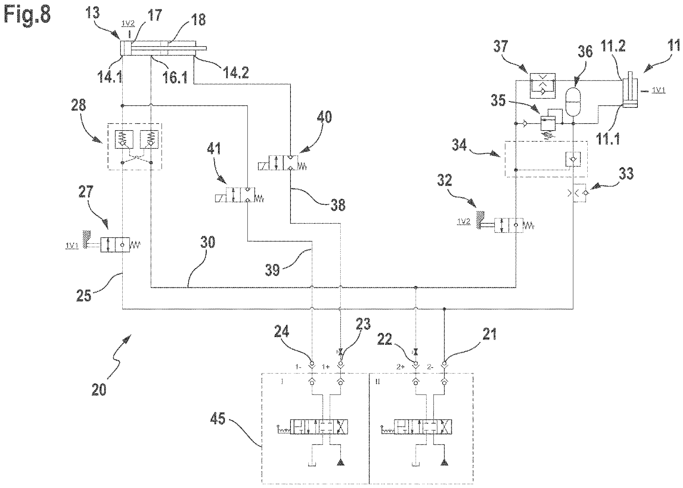

Fig. 8 zeigt eine dritte Ausführungsform einer Steueranordnung 20, die wiederum weitgehend mit der ersten und zweiten Ausführungsform identisch ist. Allerdings ist in diesem Fall im ersten Hydraulikzweig 25 ein mechanisch betätigtes drittes Schaltventil 27 angeordnet, während im zweiten Hydraulikzweig 30 ein ebenfalls mechanisch betätigtes viertes Schaltventil 32 angeordnet ist. Das dritte Schaltventil 27 wird in Abhängigkeit von einer Position des Tragrahmen-Hydraulikzylinders 11 geschaltet, während das vierte Schaltventil 32 in Abhängigkeit von einer Position des Zwischenrahmen-Hydraulikzylinders 13 geschaltet wird, genauer gesagt einer Position des Arbeitskolbens 17. Beim Hubvorgang wird zunächst nur der Hubbetrieb der Zwischenrahmen-Aktoreinheit 12 ausgelöst. Schließlich erreicht der Zwischenrahmen-Hydraulikzylinder 13 die Position, bei welcher das vierte Schaltventil 32 freigeschaltet wird, wodurch der Hubbetrieb der Tragrahmen-Aktoreinheit 10 ausgelöst wird. Beim Senkvorgang wird zunächst nur der Senkbetrieb der Tragrahmen-Aktoreinheit 10 ausgelöst. Schließlich erreicht der Tragrahmen-Hydraulikzylinder 11 die Position, bei welcher das dritte Schaltventil 27 freigeschaltet wird, wodurch der Senkbetrieb der Zwischenrahmen-Aktoreinheit 12 ausgelöst wird.

## Patentansprüche

1. Werbemaschine (1), mit einem Hauptrahmen (2), einem mit dem Hauptrahmen (2) verbundenen Zwischenrahmen (4) sowie einem mit dem Zwischenrahmen (4) verbundenen Tragrahmen (5), wobei der Hauptrahmen (2) unabhängig vom Tragrahmen (5) gegenüber einem Untergrund (50) abstützbar ist, der Tragrahmen (5) in einer Arbeitsposition (AP) über ein Hilfsfahrwerk (6) am Untergrund (50) abstützbar ist und wenigstens ein Bearbeitungsorgan (7) beweglich am Tragrahmen (5) angeordnet ist, wobei der Zwischenrahmen (4) durch eine Zwischenrahmen-Aktoreinheit (12) gegenüber dem Hauptrahmen (2) verstellbar ist, wodurch ein in der Arbeitsposition (AP) gegebener Bodenabstand (A) des wenigstens einen Bearbeitungsorgans (7) auf einen Arbeitsabstand (A1) einstellbar ist, und wobei der Tragrahmen (5) durch eine Tragrahmen-Aktoreinheit (10) gegenüber dem Hauptrahmen (2) zwischen der Arbeitsposition (AP) und einer Hubposition (HP) verstellbar ist,
**dadurch gekennzeichnet, dass**
die Werbemaschine (1) eine Steueranordnung (20) aufweist, durch welche ein Betrieb der Zwischenrahmen-Aktoreinheit (12) mit einem Betrieb der Tragrahmen-Aktoreinheit (10) derart koordiniert ist, dass bei einem Senkvorgang der Tragrahmen (5) durch einen Senkbetrieb (SB) der Tragrahmen-Aktoreinheit (10) aus der Hubposition (HP) in die Arbeitsposition (AP) verstellt wird und nachfolgend der Bodenabstand (A) durch einen Senkbetrieb (SB) der Zwischenrahmen-Aktoreinheit (12) verringert wird.

2. Werbemaschine nach Anspruch 1, **dadurch gekennzeichnet, dass** der Hauptrahmen (2) über ein Hauptfahrwerk (3) am Untergrund (50) abstützbar ist.

3. Werbemaschine nach einem der vorangehenden Ansprüche, **dadurch gekennzeichnet, dass** durch die Steueranordnung (20) der Betrieb der Zwischenrahmen-Aktoreinheit (12) mit dem Betrieb der Tragrahmen-Aktoreinheit (10) derart koordiniert ist, dass bei einem Hubvorgang der Bodenabstand (A) durch einen Hubbetrieb (HB) der Zwischenrahmen-Aktoreinheit (12) vergrößert wird, bevor der Tragrahmen (5) durch einen Hubbetrieb (HB) der Tragrahmen-Aktoreinheit (10) aus der Arbeitsposition (AP) in die Hubposition (HP) verstellt wird.

4. Werbemaschine nach einem der vorangehenden Ansprüche, **dadurch gekennzeichnet, dass** diese dazu eingerichtet ist, beim Hubvorgang den Bodenabstand (A) vom Arbeitsabstand (A1) auf einen Sicherheitsabstand (A2) zu vergrößern und/oder beim Senkvorgang vom Sicherheitsabstand (A2) auf den Arbeitsabstand (A1) zu reduzieren.

5. Werbemaschine nach einem der vorangehenden Ansprüche, **dadurch gekennzeichnet, dass** der Zwischenrahmen (4) um einen Zwischenrahmen-Schwenkachse (B) schwenkbar mit dem Hauptrahmen (2) verbunden ist und der Tragrahmen (5) um eine Tragrahmen-Schwenkachse (C) schwenkbar mit dem Zwischenrahmen (4) verbunden ist.

6. Werbemaschine nach einem der vorangehenden Ansprüche, **dadurch gekennzeichnet, dass** die Zwischenrahmen-Aktoreinheit (12) und die Tragrahmen-Aktoreinheit (10) hydraulisch betreibbar sind und die Steueranordnung (20) zur hydraulischen Ansteuerung der Aktoreinheiten (10, 12) eingerichtet ist.

7. Werbemaschine nach einem der vorangehenden Ansprüche, **dadurch gekennzeichnet, dass** die Steueranordnung (20) dazu eingerichtet ist, für wenigstens einen Verstellvorgang, der aus Hubvorgang und Senkvorgang ausgewählt ist, und einen zugehörigen Verstellbetrieb, der aus Hubbetrieb (HB) und Senkbetrieb (SB) ausgewählt ist, die Zwischenrahmen-Aktoreinheit (12) und Tragrahmen-Aktoreinheit (10) derart hydraulisch mit einem gemeinsamen Hydraulikkreis (25, 30) zu verbinden, dass der Verstellbetrieb einer bezüglich dieses Verstellvorgangs beginnenden Aktoreinheit (10, 12) bei einem niedrigeren Hydraulikdruck im Hydraulikkreis (25, 30) auslösbar ist als der Verstellbetrieb einer bezüglich dieses Verstellvorgangs nachfolgenden Aktoreinheit (10, 12).

8. Werbemaschine nach einem der vorangehenden Ansprüche, **dadurch gekennzeichnet, dass** bezüglich wenigstens eines Verstellvorgangs die beginnende Aktoreinheit (10, 12) einen niedrigeren für den Verstellbetrieb (HB, SB) notwendigen Aktivierungsdruck aufweist als die nachfolgende Aktoreinheit (10, 12), wobei bevorzugt beide Aktoreinheiten (10, 12) durchgehend hydraulisch mit dem gemeinsamen Hydraulikkreis (25, 30) verbunden sind.

9. Werbemaschine nach einem der vorangehenden Ansprüche, **dadurch gekennzeichnet, dass** die Steueranordnung (20) für wenigstens einen Verstellvorgang ein zwischen dem gemeinsamen Hydraulikkreis (25, 30) und der nachfolgenden Aktoreinheit (10, 12) zwischengeordnetes Folgeventil (26, 31) aufweist, welches dazu eingerichtet ist, bei Überschreiten eines Schwelldrucks die nachfolgende Aktoreinheit (10, 12) hydraulisch mit dem Hydraulikkreis (25, 30) zu verbinden.

10. Werbemaschine nach einem der vorangehenden Ansprüche, **dadurch gekennzeichnet, dass** die Steueranordnung (20) für wenigstens einen Verstellvorgang ein Schaltventil (27, 32) aufweist, das in Abhängigkeit von einer Position der beginnenden Aktoreinheit (10, 12) schaltbar ist, um die nachfolgende Aktoreinheit (10, 12) mit dem gemeinsamen Hydraulikkreis (25, 30) zu verbinden.

11. Werbemaschine nach einem der vorangehenden Ansprüche, **dadurch gekennzeichnet, dass** die Zwischenrahmen-Aktoreinheit (12) einen Zwischenrahmen-Hydraulikzylinder (13) aufweist, mit einem Arbeitskolben (17), durch dessen Position der Bodenabstand (A) definiert ist, sowie einem Begrenzungskolben (18), der einen Bewegungsspielraum des Arbeitskolbens (17) begrenzt und durch dessen Position der Arbeitsabstand (A1) definiert ist.

12. Verfahren zum Betreiben einer Werbemaschine (1), mit einem Hauptrahmen (2), einem mit dem Hauptrahmen (2) verbundenen Zwischenrahmen (4) sowie einem mit dem Zwischenrahmen (4) verbundenen Tragrahmen (5), wobei der Hauptrahmen (2) unabhängig vom Tragrahmen (5) gegenüber einem Untergrund (50) abgestützt wird, der Tragrahmen (5) in einer Arbeitsposition (AP) über ein Hilfsfahrwerk (6) am Untergrund (50) abgestützt wird und wenigstens ein Bearbeitungsorgan (7) beweglich am Tragrahmen (5) angeordnet ist, wobei der Zwischenrahmen (4) durch eine Zwischenrahmen-Aktoreinheit (12) gegenüber dem Hauptrahmen (2) verstellbar ist, wodurch ein in der Arbeitsposition (AP) gegebener Bodenabstand (A) des wenigstens einen Bearbeitungsorgans (7) auf einen Arbeitsabstand (A1) einstellbar ist, und wobei der Tragrahmen (5) durch eine Tragrahmen-Aktoreinheit (10) gegenüber dem Hauptrahmen (2) zwischen der Arbeitsposition (AP) und einer Hubposition (HP) verstellbar ist,
**dadurch gekennzeichnet, dass**
die Werbemaschine (1) eine Steueranordnung (20) aufweist, welche einen Betrieb der Zwischenrahmen-Aktoreinheit (12) mit einem Betrieb der Tragrahmen-Aktoreinheit (10) derart koordiniert, dass bei einem Senkvorgang der Tragrahmen (5) durch einen Senkbetrieb (SB) der Tragrahmen-Aktoreinheit (10) aus der Hubposition (HP) in die Arbeitsposition (AP) verstellt wird und nachfolgend der Bodenabstand (A) durch einen Senkbetrieb (SB) der Zwischenrahmen-Aktoreinheit (12) verringert wird.
